# EUROPEAN PATENT APPLICATION

(11) **EP 4 696 918 A1**
(43) Date of publication of application: **18.02.2026**
(21) Application number: 24194306.7
(22) Date of filing: 13.08.2024
(51) Int. Cl.: F16L 37/22, F16L 37/34

(54) **QUICK CONNECTOR**

(71) Applicant: Li, Yung Hsiang, Yizhu Township Chiayi County (TW)
(72) Inventor: Li, Yung Hsiang, Yizhu Township Chiayi County (TW)
(74) Representative: Zeitler Volpert Kandlbinder Patentanwälte Partnerschaft mbB

(57) **Abstract**

The present invention provides a quick connector, which includes a socket and a plug. The socket includes an inner bushing arranged therein, an insertion slot arranged in the inner bushing, an annular slot arranged on a wall surface of the insertion slot, and a wall sealing ring arranged in the annular slot. The plug includes an insertion portion arranged thereon and inserted into the insertion slot, and the wall sealing ring is sleeved on the outer wall of the insertion portion. The socket includes a groove arranged on an inner end surface of the insertion slot in the inner bushing, and an end surface gasket arranged in the groove. The end surface of the plug is abutted against the end surface gasket of the socket. The quick connector is double sealed by the end surface gasket and the wall sealing ring.

## Description

### BACKGROUND OF THE PRESENT INVENTION

### FIELD OF INVENTION

The present invention relates to a quick connector able to be tight-fitted firmly while connecting.

### DESCRIPTION OF RELATED ARTS

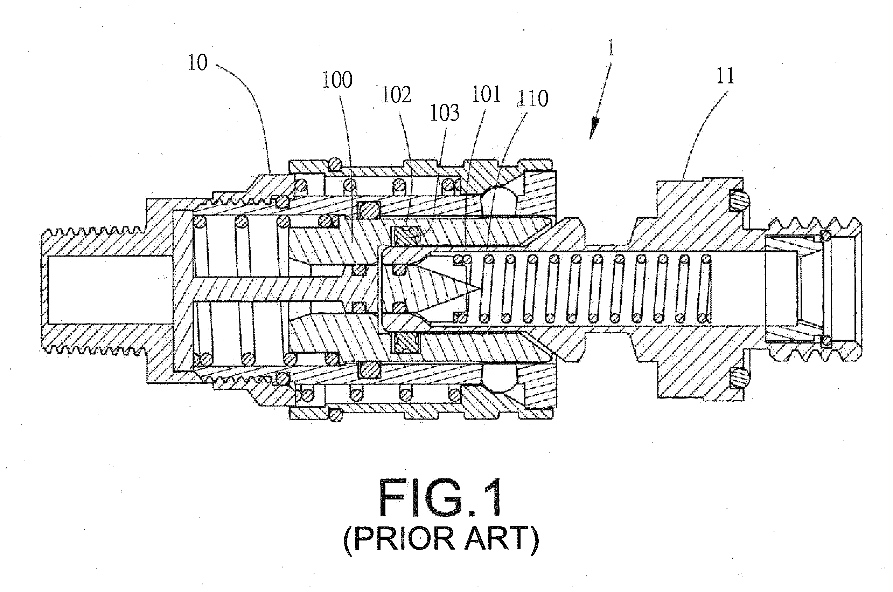

A conventional quick connector 1, as shown in Fig. 1, mainly has a socket 10 and a plug 11. The socket 10 includes an inner bushing 100 provided therein, an insertion slot 101 provided in the inner bushing 100, an annular slot 102 provided on the wall of the insertion slot 101, and a sealing ring 103 provided in the annular slot 102. The plug 11 has an insertion portion 110 provided thereon. The insertion portion 110 is inserted into the insertion slot 101 on the inner bushing 100 of the socket 10, and the sealing ring 103 is sleeved on the insertion portion 110 of the plug 11, and the sealing ring 103 abuts against the insertion portion 110 of the plug 11 to achieve sealing when the plug 11 and the socket 10 are connected. However, the conventional quick connector 1 is only sealed by the sealing ring 103 when the plug 11 and the socket 10 are connected. The sealing effect is limited, and air leakage will still occur at the end, which will affect the connection effect.

### SUMMARY OF THE PRESENT INVENTION

The main purpose of the present invention is to provide a quick connector able to be tight-fitted firmly in case of connection.

The quick connector of the present invention includes a socket and a plug, wherein the socket includes an inner bushing made of metal and arranged therein, an insertion slot arranged in the inner bushing, an annular slot arranged on a wall surface of the insertion slot, and a wall sealing ring arranged in the annular slot, wherein the plug includes an insertion portion arranged thereon, wherein the insertion portion is inserted into the insertion slot in the inner bushing of the socket, and the wall sealing ring is sleeved on the insertion portion of the plug,

wherein the socket includes a groove arranged on an inner end surface of the insertion slot in the inner bushing, and an end surface gasket made of rubber material and arranged in the groove, wherein the end surface gasket has a perforation arranged therein, wherein the insertion portion of the plug is inserted into the socket, and the end surface of the insertion portion is abutted against the end surface gasket in the inner bushing.

The quick connector of the present invention has the advantage that: the sealing of the end surface of the insertion portion of the plug can be strengthened, and the plug and socket can be completely sealed after plugging, so that the plugging of the quick connector can achieve the best sealing effect.

### BRIEF DESCRIPTION OF THE DRAWINGS

FIG. 1 illustrates a sectional view of a conventional quick connector.
FIG. 2 illustrates an exploded view of an embodiment of the present invention.
FIG. 3 illustrates an assembled perspective sectional view of the embodiment of the present invention.
FIG. 4 illustrates an assembled sectional view of the embodiment of the present invention.
FIG. 5 illustrates an assembled partial enlarged view of the embodiment of the present invention.

### DETAILED DESCRIPTION OF THE PREFERRED EMBODIMENT

Regarding the technical means adopted by the present invention to achieve the above-mentioned purposes and effects, the best and feasible embodiments are enumerated and shown in the drawings, and are described in detail as follows:

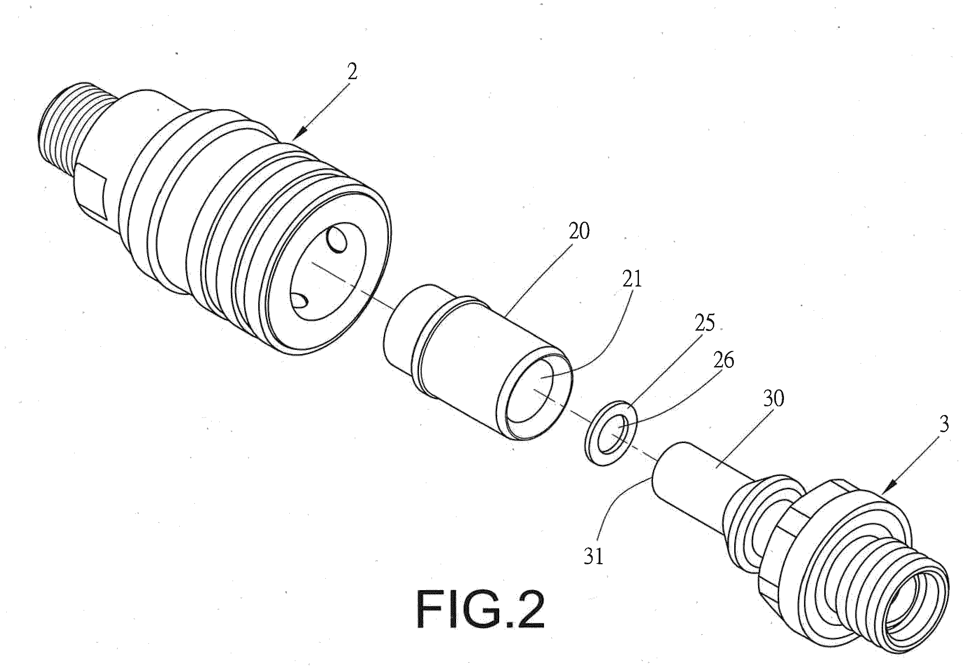

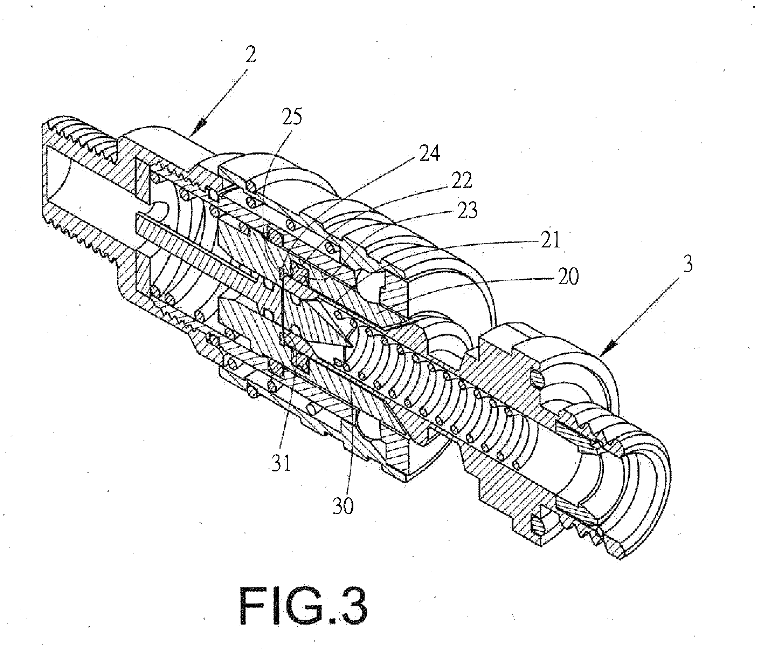

In the embodiment of the present invention, referring to Figs. 2 to 5. A quick connector mainly includes a socket 2 and a plug 3, wherein the socket 2 includes an inner bushing 20 made of metal, an insertion slot 21 arranged in the inner bushing 20, an annular slot 22 arranged on a wall surface of the insertion slot 21, a wall sealing ring 23 arranged in the annular slot 22, a groove 24 arranged on an inner end surface of the insertion slot 21 in the inner bushing 20, and an end surface gasket 25 made of rubber material and arranged in the groove 24, wherein the end surface gasket 25 has a perforation 26 arranged therein, wherein the plug 3 includes an insertion portion 30 arranged thereon, wherein the insertion portion 30 is inserted into the insertion slot 21 in the inner bushing 20 of the socket 2, the wall sealing ring 23 is sleeved on the insertion portion 30 of the plug 3, and the end surface 31 of the plug 3 is abutted against the end surface gasket 25 of the socket 2. In this way, it is a quick connector.

When assembling the embodiment of the present invention, referring to Figs. 2 to 5, setting the end surface gasket 25 into the insertion slot 21 in the inner bushing 20, embedding the end surface gasket 25 in the groove 24 of the inner bushing 20 without falling off, assembling the inner bushing 20 in the socket 2, inserting the insertion portion 30 of the plug 3 into the insertion slot 21 on the inner bushing 20 of the socket 2, attaching the end surface 31 of the plug 3 to the end surface gasket 25 of the inner bushing 20 tightly, and sleeving the wall sealing ring 23 on the wall surface of the insertion portion 30 of the plug 3, so that the assembly can be completed.

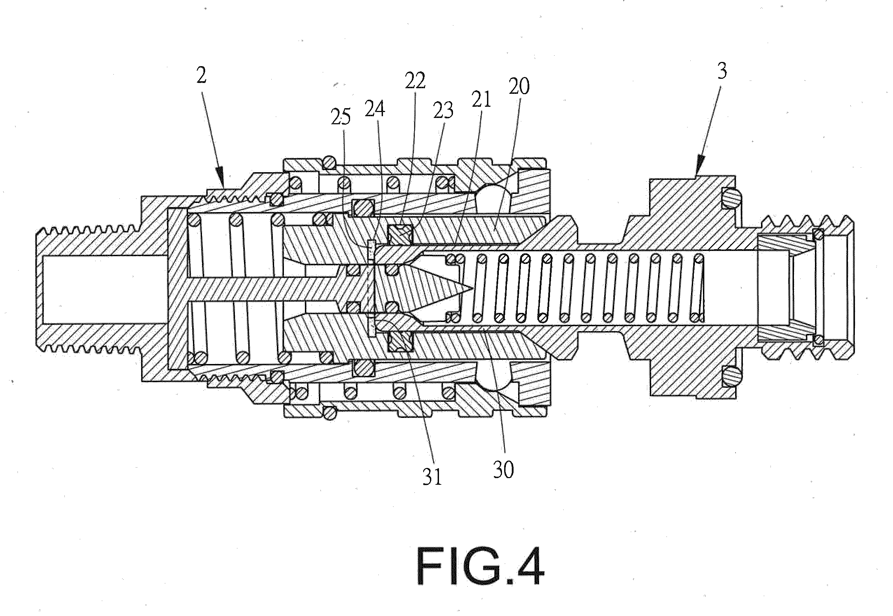

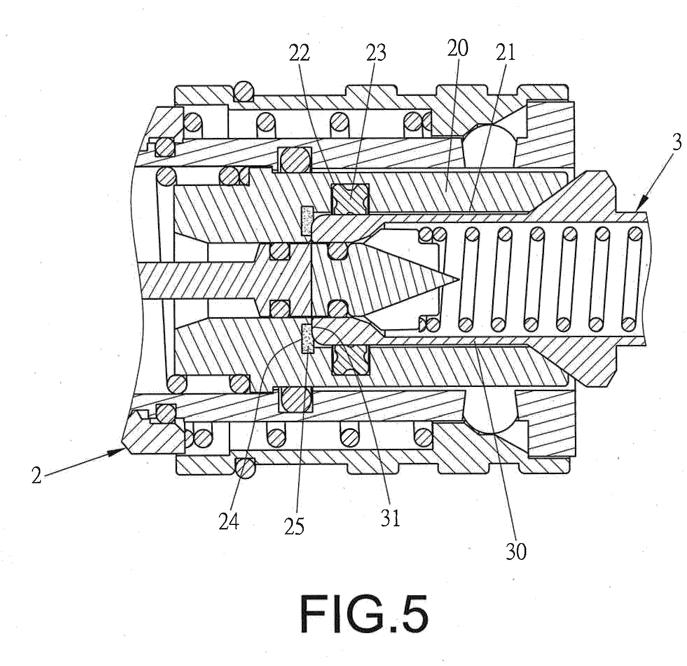

When the present invention is used, referring to Figs. 4 and 5, the insertion portion 30 of the plug 3 is inserted in the insertion slot 21 in the inner bushing 20 of the socket 2, the end surface 31 of the plug 3 is closely attached to the end surface gasket 25, and the wall sealing ring 23 is sleeved on the wall surface of the insertion portion 30 of the plug 3. In this way, under the double sealing of the end surface gasket 25 and the wall sealing ring 23, the insertion portion 30 of the plug 3 has a better sealing effect when inserted into the insertion slot 21 in the inner bushing 20 of the socket 2, and the end surface gasket 25 is located at the fluid inlet and outlet, which can reduce the leakage of each insertion and extraction of the connector and improve the effectiveness of the quick connector.

In summary, the present invention has indeed achieved the anticipated objectives and effects and is more ideal and practical than the prior art. However, the above-mentioned embodiments are only specific explanations for the preferred embodiments of the present invention, and this embodiment is not intended to limit the scope of the present invention. All equivalent variations and modifications completed under the technical means disclosed in the present invention should be included in the scope of patent protection of the present invention.

## Claims

1. A quick connector, comprising a socket and a plug, wherein the socket comprises an inner bushing made of metal and arranged therein, an insertion slot arranged in the inner bushing, an annular slot arranged on a wall surface of the insertion slot, and a wall sealing ring arranged in the annular slot, wherein the plug comprises an insertion portion arranged thereon, wherein the insertion portion is inserted into the insertion slot in the inner bushing of the socket, and the wall sealing ring is sleeved on the insertion portion of the plug,
wherein the socket comprises a groove arranged on an inner end surface of the insertion slot in the inner bushing, and an end surface gasket made of rubber material and arranged in the groove, wherein the end surface gasket has a perforation arranged therein, wherein the insertion portion of the plug is inserted into the socket, and the end surface of the insertion portion is abutted against the end surface gasket in the inner bushing.
